# EUROPÄISCHE PATENTSCHRIFT

(11) **EP 1 553 058 B1**
(45) Veröffentlichungstag und Bekanntmachung des Hinweises auf die Patenterteilung: **04.04.2007**
(21) Anmeldenummer: 04028982.9
(22) Anmeldetag: 07.12.2004
(51) Int. Cl.: C02F 3/28

(54) **Verfahren und Vorrichtung zur biologischen Behandlung einer Suspension in einem Bioreaktor mit integrierter hydraulischer Sinkschichtentnahme**
Method and apparatus for the biological treatment of a suspension in a bioreactor with integrated hydraulic sinking layer withdrawal
Procédé et dispositif de traitement biologique d'une suspension dans un bioréacteur avec prélèvement hydraulique intégré des couches d'affaissement

(30) Priorität: 11.12.2003 DE 10358400
(43) Veröffentlichungstag der Anmeldung: 13.07.2005
(73) Patentinhaber: LINDE-KCA-Dresden GmbH, 01277 Dresden (DE)
(72) Erfinder: Büchner, Thomas, 01731 Kreischa (DE); Herms, Matthias, 01277 Dresden (DE); Langhans, Gerhard, Dr., 01159 Dresden (DE)

(56) Entgegenhaltungen:
- US-A- 5 089 118
- US-A- 5 409 610
- US-A- 5 942 116

## Beschreibung

Die Erfindung betrifft ein Verfahren zur biologischen Behandlung einer Suspension in einem einen bodennahen zentrischen Abzugsbereich aufweisenden Bioreaktor, bei dem zur Umwälzung der Suspension zumindest ein Teil der Suspension durch eine vertikal ausgerichtete Leitzone geleitet wird, sodass eine bis in Bodennähe des Bioreaktors sich erstreckende oder von Bodennähe des Bioreaktors ausgehende vertikale Strömung zumindest eines Teils der Suspension erzeugt wird, sowie eine Vorrichtung zur Durchführung des Verfahrens.

Verfahren zur biologischen Behandlung von Suspensionen sind z. B. aerobe oder anaerobe Verfahren zur biologischen Abwasser-, Klärschlamm- oder Abfallbehandlung, bei denen in der Suspension enthaltene, biologisch abbaubare Substanzen mittels Mikroorganismen abgebaut werden.

Unter Verfahren zur Biogasgewinnung soll im Folgenden die anaerobe Behandlung einer biologisch abbaubare Stoffe enthaltenden Suspension, insbesondere die Vergärung von Abfällen oder die Schlammfaulung bei der Behandlung von Klärschlämmen, zu verstehen sein. Dabei werden die biologisch abbaubaren Stoffe, die auch als Gärmedium bezeichnet werden, in einem als Gärreaktor bezeichneten Bioreaktor unter Luftabschluss zu Biogas vergoren. Zur Durchmischung des Gärmediums im Gärreaktor werden häufig mechanische Rührsysteme oder hydraulische Umpumpsysteme eingesetzt. Auch eine Gaseinpressung in Bodennähe des Gärreaktors wird verschiedentlich verwendet.

Bei sogenannten Schlaufenreaktoren wird in ein innerhalb des Gärreaktors angeordnetes zentrisches Leitrohr ein Gas injiziert, wodurch das Gärmedium in das Leitrohr gezogen wird. Auf diese Weise kann z. B. Gärmedium aus Bodennähe des Gärreaktors bis zur Oberfläche des im Gärreaktor befindlichen Gärmediums durch das Leitrohr gefördert werden. Somit kann zumindest ein Großteil des Gärmediums im Gärreaktor umgewälzt werden. Ein solches System ist z. B. in der DE 197 25 823 A1 beschrieben. Dieses System bietet neben dem wesentlichen Merkmal, dass keine bewegten Teile im Gärreaktor vorhanden sind, noch weitere Vorteile: Beispielsweise wird eine gradientenarme, gute Durchmischung über die vertikale Schlaufe erreicht. Außerdem wird die Möglichkeit einer Wärmeübertragerintegration in den Gärreaktor in Form eines heizwasserdurchströmten Doppelmantelleitrohres geboten. Durch die Gaseinblasung in die Schlaufenströmung und damit verbundene Oberflächenschwallbildung und turbulentes Untermischen im radial auswärts gerichteten Oberflächenstrom wird darüberhinaus die Bildung einer Schwimmdecke bekämpft. Aufgrund definierter bodennaher Strömungsverhältnisse für den Sedimenttransport in Richtung des zentrischen Bodenabzugs wird schließlich auch die Bildung von Sedimentablagerungen behindert.

Es hat sich jedoch im praktischen Betrieb gezeigt, dass für spezielle Schlamm- und Abfallqualitäten, die dem Gärreaktor anlagenspezifisch zugeführt werden, Schwimmschicht- und Sedimentprobleme auftreten können, die zusätzliche Maßnahmen zur Beherrschung erfordern.

Das betrifft zum einen Schlämme mit höherem Gehalt an Detergenzien und feinfaserigen Kunststoff- und Zellulosepartikeln, wie sie aus der kommunalen Abwasserbehandlung oder speziellen gewerblichen Organikreststoffen resultieren, sowie höherviskose Schlämme, die herkunftsbedingt größere Masseanteile feinen Glasbruchs und anderer unregelmäßig geformter Inertpartikel enthalten.

Für erstere Materialien kann es zu einem flotativen Aufrahmen kommen, mit Ansammlung im Außenbereich der Gärgutoberfläche im Reaktor, wo die radialabklingende Turbulenz nicht mehr für eine Untermischung ausreicht. Bei nicht sandähnlichen Sedimenten (abgerundete Quarzkörner) kann es zu einem Verhaken der Partikel durch ihre unregelmäßigen Bruchkanten kommen, was erhöhten Widerstand gegenüber dem hydraulischen Transport zur zentrischen Bodenentnahme bedeutet.

Der Erfindung liegt die Aufgabe zugrunde, ein Verfahren der eingangsgenannten Art so auszugestalten, dass Sedimentprobleme vermieden werden.

Diese Aufgabe wird erfindungsgemäß verfahrensseitig dadurch gelöst, dass der vertikalen Strömung in Bodennähe des Bioreaktors durch Einleiten eines Fluids eine horizontale Strömung überlagert wird, wodurch eine Spiralströmung zu dem zentrischen Abzugsbereich des Bioreaktors erzeugt wird.

Der Grundgedanke der Erfindung besteht also darin, dem gasinduzierten Schlaufenreaktorprinzip ein hydraulisches Strahlsystem zu überlagern. Dadurch können die verfahrenstechnischen Vorteile eines Schlaufenreaktors mit Leitrohr und Gaseinpressung genutzt werden und gleichzeitig medienspezifisch auftretende Problemfälle durch zyklischen Betrieb des hydraulischen Systems bekämpft werden, ohne den Energieeintrag in das Bioreaktorsystem signifikant zu erhöhen.

Verfahrenstechnische Berechnungen belegen, dass ein in Bodennähe in den Bioreaktor eingestrahlter Flüssigkeitsfreistrahl eine Rotation der bodennahen Flüssigkeitsmasse bewirkt. Aus der Überlagerung des abwärts und in Bodennähe zum Zentrum gerichteten Flüssigkeitsstromes der vertikalen Reaktorschlaufe mit der bodennahen Rotation stellt sich eine Spiralströmung zum Reaktorzentrum ein. Die Zusatzströmung im wandnahen Bereich des Reaktors, wo die Schlaufenströmung am geringsten ist und damit Sedimentausfällungen möglich werden, unterstützt den Partikeltransport zur Reaktormitte in den Bereich der Absaugung. Erreicht wird dies über den sogenannten "Teetasseneffekt", da sich gemäß der Bernoullischen Gleichung ein lokales Druckgefälle in diese Richtung einstellt.

Bei Bioreaktoren bis 8000m³ Reaktionsvolumen und Durchmessern von bis zu 22m reicht es aus, das Fluid mit einer Strömungsgeschwindigkeit von 10 bis 15m/s, vorzugsweise als Flüssigkeitsfreistrahl, in den Bioreaktor einzuleiten. Außerdem wird das Fluid bevorzugt mit einem Volumenstrom von 300 bis 600m³/h in den Bioreaktor eingeleitet. Dadurch wird der notwendige Impulsstrom erzeugt, um die bodennahe Flüssigkeitsmasse mit ca. 0,5m/s nahe der Behälterwand rotieren zu lassen.

Als besonders günstig hat sich ferner erwiesen, das Fluid unter einem Ausstellwinkel zum Radiusstrahl von 40 bis 60°C in den Bioreaktor einzuleiten, um das notwendige Drehmoment zu induzieren. Ferner sollte ein Neigungswinkel zur Horizontalen von 0 bis 10°C eingestellt werden, um medienbedingte Auftriebskräfte im Strahlfeld (Gaseinschlüsse) zu kompensieren. Als Fluid wird zweckmäßigerweise ein Teil der Suspension verwendet, der aus dem Bioreaktor abgesaugt und bevorzugt als Flüssigkeitsfreistrahl über eine Düse in den Bioreaktor eingeleitet wird.

Bei unregelmäßig geformten Feststoffteilchen reicht die globale Flüssigkeitsbewegung nicht aus, um sedimentierte Partikel wieder anzuheben. Überraschender Weise zeigte sich jedoch, dass im Bereich des aktiven Freistrahlbereiches mit einer lokalen Geschwindigkeit größer als die mittlere Flüssigkeitsgeschwindigkeit Bodensedimente deutlich gegenüber dem sonstigen Ablagerungsbereich vermindert sind. Hier wirken die Gesetzmäßgkeiten der Geschiebebewegung, bei denen nach dem "Magnuseffekt" durch rollende Teilchenbewegung am Boden eine vertikale Auftriebskraft am Teilchen induziert wird, die es lokal anhebt und damit wieder in das zum Zentrum gerichtete Strömungsfeld bringt.

In der Summe dieser Bewegungsabläufe verlagern sich randnahe Sedimente zur Reaktormitte. Unterstützt werden diese Effekte durch eine im Bodenfundament eingearbeitete Neigung zum Behälterzentrum zwischen bevorzugt 10 bis 20°C, um übliche Fundamentierungstechniken einsetzen zu können.

Der Flüssigkeitsfreistrahl wird zweckmäßigerweise über eine extern aufgestellte Pumpe erzeugt, die Flüssigkeit der benötigten Menge aus dem Reaktor ansaugt und wieder über die Düse zurückfördert.

Um den beschrieben Magnuseffekt über den gesamten Behälterumfang zu gewährleisten wird das Fluid vorzugsweise über mehrere in Bodennähe am Bioreaktorumfang verteilte Düsen in den Bioreaktor eingeleitet. Je nach Reaktorgröße sind zwischen 1 und 5 Düsen in entsprechenden Abständen am Bioreaktorumfang vorgesehen.

Der gleichzeitige Betrieb der Düsen würde den zwei- bis fünffachen Energieverbrauch für das hydraulische Zusatzsystem bedeuten. Überraschend zeigte sich jedoch, dass der beschriebene Effekt auch bei zeitlich versetztem Betrieb der Bodendüsen zu verzeichnen ist, da auch zwischenzeitlich sedimentierte Partikel effektgemäß wieder weiter transportiert werden können. Gemäß einer besonders bevorzugten Ausführungsform der Erfindung werden daher alle installierten Düsen mit einer Pumpe verbunden und von dieser mittels zyklischer Umschaltung der Reihe nach beaufschlagt. Dies ermöglicht eine effiziente und wartungsarme Betriebsweise.

Wird eine definierte Auskreisung sedimentierfähiger Partikel aus dem Bioreaktor gefordert, kann in die Pumpenleitung für das Freistrahlsystem ein entsprechend des gewünschten Abscheidegrades dimensionierter Hydrozyklon eingebunden werden. Zweckmäßigerweise wird dann die Ansaugleitung der Pumpe zum Bodenzentrum des Bioreaktors geführt, wo sich die sedimentangereicherte Medienfraktion befindet.

Gemäß einer Weiterbildung des Erfindungsgedankes erfolgt eine intensivierte Schwimmschlammbehandlung ebenfalls über Düsensysteme, die oberflächennah am Behälterumfang angeordnet sind. Dabei wird das aus dem Bioreaktor abgesaugte Fluid teilweise oder in zeitlicher Abfolge zusätzlich über mindestens eine im Bereich der Suspensions-Füllstandshöhe vorgesehene Düse derart in den Bioreaktor eingeleitet, dass die Oberfläche der Suspension und/oder auf der Oberfläche der Suspension schwimmender Schwimmschlamm in eine Rotationsströmung versetzt wird. Vorzugsweise wird das Fluid über tangential am Behälterumfang angeordnete Düsen in den Bioreaktor eingeleitet. Dabei können die Düsen von derselben Pumpe beaufschlagt werden wie die in Bodennähe angeordneten Düsen. Eine derartige hydraulische Anbindung über die Bodendüsenpumpe empfiehlt sich insbesondere, wenn die Einschaltzyklen als gering eingeschätzt werden und dem Bodensystem ein oder zwei zusätzliche Schaltzyklen zugemutet werden können. Bei medienbedingtem häufigen Betrieb der Schwimmschlammdüsen ist dagegen eine separate Pumpe vorzuziehen.

Die sich in Nähe des Behälterumfangs anreichernden Schwimmschlamm- und Schaumpartikel haben die Tendenz längerfristig zu verkleben und sich zu verfestigen. Sie müssen deshalb ständig befeuchtet und gleitfähig gehalten werden, sind im Verbund aufzulockern und von adhäsiv anhaftenden Gasbläschen zu befreien, um den Auftrieb zu vermindern. Gegebenenfalls muss eine Ausschleusung in Oberflächennähe möglich sein.

Eine komplette Bekämpfung über den gesamten Reaktorumfang ist technologisch nicht sinnvoll, da stählerne Gärreaktoren meist nicht für einen Flüssigkeitsstand im Bereich der Dachschräge festigkeitsmäßig ausgelegt sind. Damit entspricht die freie Flüssigkeitsoberfläche der Querschnittsfläche des zylindrischen Reaktorteils.

Gemäß einer besonders bevorzugten Ausführungsform der Erfindung wird das Problem so gelöst, dass die durch die radiale Oberflächenströmung von der Leitzone zum Behälterrand außen ringförmig zusammengeschobene Schwimmdecke hydraulisch durch bevorzugt mindestens eine am Behälterumfang tangential angeordnete Düse mit Flüssigkeitsfreistrahlen beaufschlagt und mittels des übertragenen Impulses in Zirkulation versetzt wird. Dabei läuft der Schwimmschlammring durch die Strahlzonen und wird dabei in der gewünschten Weise befeuchtet und aufgelockert.

Ein radial an der Behälterinnenwand befestigter Schwimmschlammabzug mit abschieberbarer Fallleitung in Höhe der Flüssigkeitsoberfläche ermöglicht zweckmäßigerweise die bedarfsweise Entnahme vom Schwimmgut, das nicht mehr in die Suspension einrührbar ist. Durch Füllstandsänderung im Bioreaktor können die Bedingungen so eingestellt werden, dass entweder die Schwimmdecke über dem Abzug rotiert oder das Material chargenweise in den Abzugskasten geschoben wird.

Hierzu ist bevorzugt eine Düse mit analoger Dimensionierung wie die Bodendüsen in solchem Abstand vor dem Schwimmschlammabzug angeordnet, dass sie mit noch ausreichendem Impuls das Material in den Abzugskasten schwemmt. Gegenüberliegend ist bevorzugt eine zweite Düse angeordnet, die für Bewegung und Befeuchtung sorgt. Der Betrieb beider Düsen erfolgt zweckmäßigerweise ebenfalls zyklisch.

Neben dem Verfahren zur biologischen Behandlung einer Suspension betrifft die Erfindung auch eine Vorrichtung zur biologischen Behandlung einer Suspension mit einem Bioreaktor zur Aufnahme der Suspension, wobei im Innenraum des Bioreaktors eine bis in Bodennähe des Bioreaktors reichende Leiteinrichtung mit vertikaler Ausrichtung zur Umwälzung der Suspension angeordnet ist.

Vorrichtungsseitig wird die gestellte Aufgabe erfindungsgemäß dadurch gelöst, dass in Bodennähe des Bioreaktors mindestens eine Düse zur Einleitung eines Fluids in den Bioreaktor angeordnet ist.

Die Düse ist zweckmäßigerweise über eine mit dem Innenraum des Bioreaktors verbundene Zuleitung und eine Pumpe mit Suspension beaufschlagbar. Bevorzugt sind mehrere Düsen in Bodennähe am Bioreaktorumfang verteilt angeordnet. Dabei stehen die Düsen vorzugsweise mit einer gemeinsamen Pumpe in Verbindung. Um medienbedingte Auftriebskräfte zu kompensieren sind die Düsen vorzugsweise mit einem Neigungswinkel gegen die Horizontale zwischen 0 und 10°C angeordnet.

Eine Weiterbildung der erfindungsgemäßen Vorrichtung sieht vor, dass die mit dem Innenraum des Bioreaktors verbundene Zuleitung zusätzlich mit mindestens einer im Bereich der vorgesehen Suspensions-Füllstandshöhe angeordneten Düse zur Einleitung des Fluids in den Bioreaktor in Verbindung steht. Dabei ist die Düse zweckmäßigerweise tangential am Behälterumfang angeordnet. Die Düse ist vorteilhafterweise mit derselben Pumpe verbunden wie die in Bodennähe des Bioreaktors angeordnete Düse.

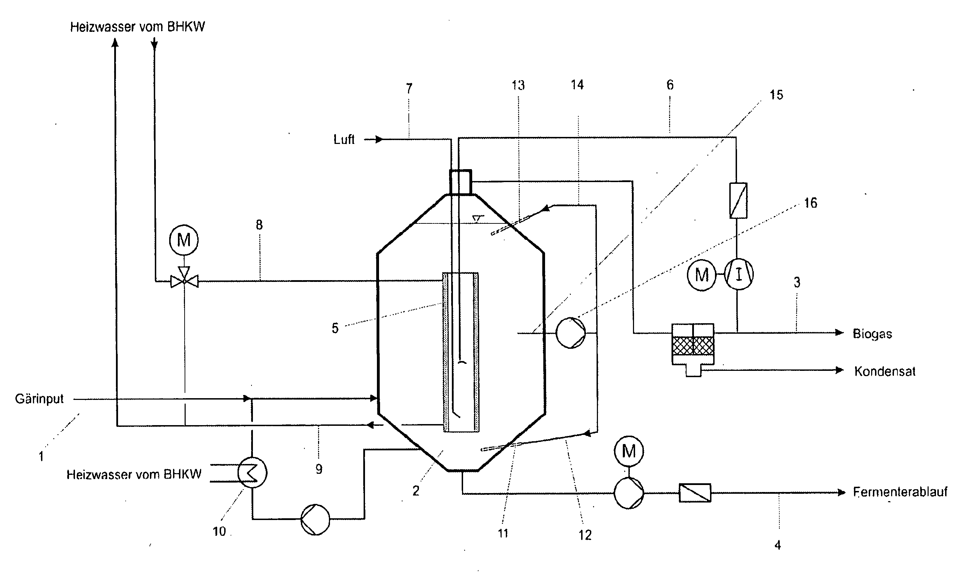

Im Folgenden soll die Erfindung anhand eines in der Figur schematisch dargestellten Ausführungsbeispiels näher erläutert werden.

In der Figur ist beispielhaft eine Anlage zur Vergärung von Nassmüll dargestellt. Der Nassmüll wird in in der Figur nicht gezeigten Vorbehandlungsschritten so aufbereitet, dass Pulpe bzw. Hydrolysat entstehen. Die Pulpe bzw. das Hydrolysat werden als mit Gärmedium bezeichnete Suspension über Leitung 1 dem als Gärreaktor 2 bezeichneten Bioreaktor zugeführt. Im Gärreaktor 2 wird die Methanisierung der Pulpe bzw. des Hydrolysats durchgeführt. Hierzu wird der Gärreaktor 2 unter anaeroben Bedingungen gehalten und der Gärreaktorinhalt umgewälzt. Die in der gärenden Pulpe bzw. dem Hydrolysat enthaltene anaerobe Biomasse wandelt die organischen Substanzen teilweise in Kohlendioxid und Methan um. Das anfallende Biogas wird über Leitung 3 aus dem Gärreaktor 2 abgezogen.

Da die Pulpe bzw. das Hydrolysat auch Schwefelverbindungen enthalten, würde ohne weitere Maßnahme auch H₂S gebildet, das sich schließlich im Biogas wiederfinden würde. Um die unerwünschten H₂S Anteile im Biogas zu minimieren, wird der gesamte Gärreaktorinhalt definiert durch eine sauerstoffhaltige Zone 5 mit ausreichender Kontaktzeit zwischen sauerstoffhaltigem Gas und Gärmedium gefördert. Zu diesem Zweck ist der Gärreaktor 2 als Schlaufenreaktor mit innenliegender Schlaufe in Form eines zentrisch, vertikal angeordneten Leitrohres 5, das als sauerstoffhaltige Zone fungiert, gestaltet. Dabei dient in den unteren Teil des Leitrohrinnenraumes gepumptes Biogas, das über eine Biogaszweigleitung 6 von der Biogasableitung 2 abgezweigt wird, als Treibgas. Infolge der Gemischdichteabsenkung im Leitrohr 5 und der Gasauftriebkraft wird das Gärmedium von unten nach oben durch das Leitrohr 5 gefördert. Dabei werden die hydraulischen Verhältnisse durch Wahl der Leitrohrgeometrie und des eingepressten Biogasstromes der Gestalt eingestellt, dass der gesamte Gärreaktorinhalt mindestens zweimal pro Stunde durch das Leitrohr 5 gepumpt wird. In den inneren Aufstrom des Leitrohres 5 wird Luft mittels einer Luftzuleitung 7 in solchen Mengenverhältnissen dosiert, dass das Gärmedium während der Passage des Leitrohres 5 ausreichend Sauerstoffkontakt bekommt, um die H₂S-Bildung in ihren Stoffwechselprozessen in der gewünschten Weise zu limitieren. Gleichzeitig wird der Sauerstoff biochemisch soweit abgebaut, dass im Biogas keine prozessbeeinträchtigenden Sauerstoffanteile mehr vorhanden sind. Der Luftbedarf kann dabei so minimiert werden, dass der Stickstoff im Biogas nicht zu einer signifikanten Gasqualitätsminderung für die weitere kalorische Nutzung führt. Zur Aufrechterhaltung einer für die biologische Behandlung des Gärmediums optimalen Betriebstemperatur ist das Leitrohr 5 beheizbar ausgebildet. Hierzu ist das Leitrohr 5 mit einem doppelwandigen Mantel versehen, der eine Zuführung 8 und eine Abführung 9 für Heizwasser aufweist. Zusätzlich oder alternativ kann der Gärreaktorinhalt mittels eines außenliegenden Wärmetauschers 19, der von Heizwasser durchflossen wird, temperiert werden.

Zur Bekämpfung von medienspezifisch auftretenden Problemfällen, insbesondere bei speziellen Schlamm- und Abfallqualitäten entstehenden Sedimentproblemen, wird dem gasinduzierten Schlaufenreaktorprinzip ein hydraulisches Strahlsystem überlagert. Auf diese Weise können die verfahrenstechnischen Vorteile des Schlaufenreaktors mit Leitrohr 5 und Gaseinpressung 7 genutzt werden und gleichzeitig medienspezifisch auftretende Probleme gelöst werden, ohne den Energieintrag in das Gärsystem signifikant zu erhöhen. Zu diesem Zweck wird über Leitung 15 und Pumpe 16 Gärmedium aus dem Gärreaktor 2 abgezogen und über Leitung 12 einer Düse 11 zugeführt.

Über die Düse 11 wird das Gärmedium als Flüssigkeitsfreistrahl mit einer Düsengeschwindigkeit von 10 bis 15m/s und einem Volumenstrom vom 300 bis 600m³/h im bodenahen Bereich in den Gärreaktor 2 eingeleitet. Bei Gärreaktoren bis 8000m³ Reaktionsvolumen und Durchmessern bis 24m wird auf diese Weise der notwendige Impulsstrom erzeugt, um die bodennahe Flüssigkeitsmasse mit ca. 0,5 m/s nahe der Behälterwand rotieren zu lassen. Dabei ist die Düse 11, die einen Durchmesser von 50 bis 120mm aufweist, in Abhängigkeit von Behältergröße und Prozessparametern um 40 bis 60° zum Radiusstrahl ausgestellt, um das Drehmoment zu indizieren. Ein Neigungswinkel der Düse 11 zur Horizontalen zwischen 0 und 10° kompensiert die medienbedingten Auftriebskräfte im Strahlfeld. In der Praxis sind über den gesamten Gärreaktor-Behälterumfang je nach Reaktorgröße zwischen zwei und fünf Düsen in entsprechenden Abständen am Umfang angeordnet. Der Übersichtlichkeit wegen ist in der Figur nur eine Düse 11 dargestellt. Alle installierten Düsen sind mit einer einzigen Pumpe, nämlich Pumpe 16, verbunden und werden von dieser mittels zyklischer Umschaltung der Reihe nach beaufschlagt. Das ermöglicht eine effiziente und wartungsarme Betriebsweise.

Um auch Schwimmschlammprobleme zu bekämpfen, führt von der Pumpe 16 eine Zweigleitung 14 zu einer oberflächennah am Gärreaktor-Behälterumfang angeordnete Düse 13. Die hydraulische Anbindung dieser Düse 13 erfolgt über die Pumpe 16, wenn die Einschaltzyklen als gering eingeschätzt werden und dem Bodensystem ein oder zwei zusätzliche Schaltzyklen zugemutet werden können. Bei medienbedingt häufigem Betrieb der Düse 13 ist eine separate Pumpe vorzuziehen. Wie bei den in Bodennähe angeordneten Düsen 11 ist es auch bezüglich der oberflächennah vorgesehenen Düse 13 empfehlenswert, mehrere Düsen anzuordnen. Der Übersichtlichkeit wegen ist allerdings wieder nur eine Düse 13 in der Figur dargestellt.

## Patentansprüche

1. Verfahren zur biologischen Behandlung einer Suspension in einem einen bodennahen, zentrischen Abzugsbereich aufweisenden Bioreaktor, bei dem zur Umwälzung der Suspension zumindest ein Teil der Suspension durch eine vertikal ausgerichtete Leitzone geleitet wird, sodass eine bis in Bodennähe des Bioreaktors sich erstreckende oder von Bodennähe des Bioreaktors ausgehende vertikale Strömung zumindest eines Teils der Suspension erzeugt wird wobei die vertikale Strömung durch Einpressung eines Gases in die Leitzone induziert wird, **dadurch gekennzeichnet, dass** der vertikalen Strömung in Bodennähe des Bioreaktors durch Einleiten eines Fluids eine horizontale Strömung überlagert wird, wodurch eine Spiralströmung zu dem Abzugsbereich des Bioreaktors erzeugt wird.

2. Verfahren nach Anspruch 1, **dadurch gekennzeichnet, dass** das Fluid mit einer Strömungsgeschwindigkeit von 10 bis 15 m/s in den Bioreaktor eingeleitet wird.

3. Verfahren nach Anspruch 1 oder 2, **dadurch gekennzeichnet, dass** das Fluid mit einem Volumenstrom von 300 bis 600 m³/h in den Bioreaktor eingeleitet wird.

4. Verfahren nach einem der Ansprüche 1 bis 3, **dadurch gekennzeichnet, dass** in Bodennähe des Bioreaktors an der Bioreaktorwand eine Strömungsgeschwindigkeit der Spiralströmung von 0,5 m/s erzielt wird.

5. Verfahren nach einem der Ansprüche 1 bis 4, **dadurch gekennzeichnet, dass** das Fluid unter einem Ausstellwinkel zum Radiusstrahl von 40 bis 60 °C in den Bioreaktor eingeleitet wird.

6. Verfahren nach einem der Ansprüche 1 bis 5, **dadurch gekennzeichnet, dass** das Fluid unter einem Winkel von 0 bis 10 °C zur horizontalen nach Unten geneigt in den Bioreaktor eingeleitet wird.

7. Verfahren nach einem der Ansprüche 1 bis 6, **dadurch gekennzeichnet, dass** als Fluid die Suspension verwendet wird, die aus dem Bioreaktor abgesaugt und über eine Düse in den Bioreaktor eingeleitet wird.

8. Verfahren nach einem der Ansprüche 1 bis 7, **dadurch gekennzeichnet, dass** das Fluid über mehrere in Bodennähe am Bioreaktorumfang verteilte Düsen in den Bioreaktor eingeleitet wird.

9. Verfahren nach Anspruch 8, **dadurch gekennzeichnet, dass** die Düsen zeitlich versetzt mit dem Fluid beaufschlagt werden.

10. Verfahren nach Anspruch 8, **dadurch gekennzeichnet, dass** die Düsen mit einer gemeinsamen Pumpe betrieben werden und dieser mittels zyklischer Umschaltung der Reihe nach beaufschlagt werden.

11. Verfahren nach einem der Ansprüche 7 bis 10, **dadurch gekennzeichnet, dass** die Suspension vom Bodenzentrum des Bioreaktors abgesaugt wird.

12. Verfahren nach einem der Ansprüche 7 bis 11, **dadurch gekennzeichnet, dass** das aus dem Bioreaktor abgesaugte Fluid teilweise oder in zeitlicher Abfolge zusätzlich über mindestens eine im Bereich der Suspensions-Füllstandshöhe vorgesehene Düse derart in den Bioreaktor eingeleitet wird, dass die Oberfläche der Suspension und/oder auf der Oberfläche der Suspension schwimmende Schwimmschlamm in eine Rotationsströmmung versetzt wird.

13. Verfahren nach Anspruch 12, **dadurch gekennzeichnet, dass** das Fluid über tangential am Behälterumfang angeordnete Düsen in den Gärreaktor eingeleitet wird.

14. Verfahren nach Anspruch 13, **dadurch gekennzeichnet, dass** die Düsen von der selben Pumpe beaufschlagt werden wie die in Bodennähe angeordneten Düsen.

15. Vorrichtung zur biologischen Behandlung einer Suspension mit einem Bioreaktor zur Aufnahme von der Suspension, wobei im Innenraum des Bioreaktors eine bis in Bodennähe des Bioreaktors reichende Leiteinrichtung mit vertikaler Ausrichtung und eine Einrichtung zur Einpressung eines Gases zur Umwälzung der Suspension angeordnet ist, **dadurch gekennzeichnet, dass** in Bodennähe des Bioreaktors mindestens eine Düse zur Einleitung eines Fluids in den Bioreaktor angeordnet ist.

16. Vorrichtung nach Anspruch 15, **dadurch gekennzeichnet, dass** die Düse über eine mit dem Innenraum des Bioreaktors verbundene Zuleitung und eine Pumpe mit der Suspension beaufschlagbar ist.

17. Vorrichtung nach Anspruch 15 oder 16, **dadurch gekennzeichnet, dass** mehrere Düsen in Bodennähe am Bioreaktorumfang verteilt angeordnet sind.

18. Vorrichtung nach Anspruch 17, **dadurch gekennzeichnet, dass** die Düsen mit einer gemeinsamen Pumpe in Verbindung stehen.

19. Vorrichtung nach Anspruch 17 oder 18, **dadurch gekennzeichnet, dass** die Düsen mit einem Neigungswinkel gegen die horizontale zwischen 0 und 10 °C angeordnet sind.

20. Vorrichtung nach einem der Ansprüche 16 bis 19, **dadurch gekennzeichnet, dass** der Bioreaktorboden eine Neigung vom Behälterrand zur Mitte von bevorzugt 10 bis 20° aufweist.

21. Vorrichtung nach einem der Ansprüche 16 bis 20, **dadurch gekennzeichnet, dass** die mit dem Innenraum des Bioreaktors verbundene Zuleitung zusätzlich mit mindestens einer im Bereich der vorgesehenen Suspensions-Füllstandshöhe angeordneten Düse in Verbindung steht.

22. Vorrichtung nach Anspruch 21, **dadurch gekennzeichnet, dass** die Düse tangential am Behälterumfang angeordnet ist.

23. Vorrichtung nach Anspruch 21 oder 22, **dadurch gekennzeichnet, dass** die Düse mit derselben Pumpe verbunden ist wie die in Bodennähe des Bioreaktors angeordnete Düse.

## Claims

1. Method for the biological treatment of a suspension in a bioreactor having a close-to-bottom central take-off region, in which, to circulate the suspension, at least a part of the suspension is passed through a vertically oriented guide zone, so that a vertical flow extending to close to the bottom of the bioreactor or starting from close to the bottom of the bioreactor of at least a part of the suspension is generated, the vertical flow being induced by forcing a gas into the guide zone, **characterized in that** a horizontal flow is superimposed on the vertical flow close to the bottom of the bioreactor by introducing a fluid, as a result of which a spiral flow to the take-off region of the bioreactor is generated.

2. Method according to Claim 1, **characterized in that** the fluid is introduced into the bioreactor having a flow velocity of 10 to 15 m/s.

3. Method according to Claim 1 or 2, **characterized in that** the fluid is introduced into the bioreactor having a volumetric flow rate of 300 to 600 m³/h.

4. Method according to one of Claims 1 to 3, **characterized in that** close to the bottom of the bioreactor at the bioreactor wall a flow velocity of 0.5 m/s of the spiral flow is achieved.

5. Method according to one of Claims 1 to 4, **characterized in that** the fluid is introduced into the bioreactor at a flare angle to the radial jet of 40 to 60°.

6. Method according to one of Claims 1 to 5, **characterized in that** the fluid is introduced into the bioreactor inclined downwards at an angle of 0 to 10° to the horizontal.

7. Method according to one of Claims 1 to 6, **characterized in that**, as fluid, use is made of the suspension which is drawn out of the bioreactor by suction and introduced into the bioreactor via a nozzle.

8. Method according to one of Claims 1 to 7, **characterized in that** the fluid is introduced into the bioreactor via a plurality of nozzles distributed close to the bottom at the bioreactor periphery.

9. Method according to Claim 8, **characterized in that** the nozzles are charged with the fluid at staggered times.

10. Method according to Claim 8, **characterized in that** the nozzles are driven by a shared pump and they are charged sequentially by a cyclic circuit.

11. Method according to one of Claims 7 to 10, **characterized in that** the suspension is drawn off by suction from the bottom centre of the bioreactor.

12. Method according to one of Claims 7 to 11, **characterized in that** the fluid drawn out of the bioreactor by suction is introduced into the bioreactor in part or in time sequence additionally via at least one nozzle provided in the region of the suspension filling height in such a manner that the surface of the suspension and/or floating sludge floating on the surface of the suspension is set into a rotary flow.

13. Method according to Claim 12, **characterized in that** the fluid is introduced into the fermentation reactor via nozzles arranged tangentially at the vessel periphery.

14. Method according to Claim 13, **characterized in that** the nozzles are charged by the same pump as the nozzles arranged close to the bottom.

15. Apparatus for the biological treatment of a suspension having a bioreactor for receiving the suspension, in the interior of the bioreactor a guide device extending to close to the bottom of the bioreactor in vertical orientation and a device for forcing in a gas for circulating the suspension being arranged, **characterized in that** close to the bottom of the bioreactor at least one nozzle is arranged for introducing a fluid into the bioreactor.

16. Apparatus according to Claim 15, **characterized in that** the nozzle can be charged with the suspension via a feed line connected to the interior of the bioreactor, and a pump.

17. Apparatus according to Claim 15 or 16, **characterized in that** a plurality of nozzles are arranged to be distributed close to the bottom at the bioreactor periphery.

18. Apparatus according to Claim 17, **characterized in that** the nozzles are connected to a shared pump.

19. Apparatus according to Claim 17 or 18, **characterized in that** the nozzles are arranged at an angle of inclination to the horizontal between 0 and 10°.

20. Apparatus according to one of Claims 16 to 19, **characterized in that** the bioreactor bottom has an inclination from the vessel rim to the centre of preferably 10 to 20°.

21. Apparatus according to one of Claims 16 to 20, **characterized in that** the feed line connected to the interior of the bioreactor is additionally connected to at least one nozzle arranged in the region of the provided suspension filling height.

22. Apparatus according to Claim 21, **characterized in that** the nozzle is arranged tangentially at the vessel periphery.

23. Apparatus according to Claim 21 or 22, **characterized in that** the nozzle is connected to the same pump as the nozzle arranged close to the bottom of the bioreactor.

## Revendications

1. Procédé de traitement biologique d'une suspension, mis en oeuvre dans un bioréacteur comportant une zone d'écoulement en situation centrale et à proximité du fond, ladite suspension étant recirculée dans le bioréacteur en introduisant au moins une partie de la suspension dans une zone de guidage qui est disposée verticalement, de façon à créer un flux vertical impliquant au moins une partie de la suspension et atteignant la zone à proximité du fond du bioréacteur ou partant de la zone à proximité du fond du bioréacteur, ledit flux vertical étant induit par l'injection d'un gaz dans la zone de guidage, **caractérisé en ce que**, dans la zone à proximité du fond du bioréacteur, un flux horizontal créé par l'introduction d'un fluide est superposé au flux vertical, de façon à créer un flux hélicoïdal vers la zone d'écoulement du bioréacteur.

2. Procédé selon la revendication 1, **caractérisé en ce que** le fluide est introduit dans le bioréacteur à une vitesse d'écoulement allant de 10 à 15 m/s.

3. Procédé selon les revendications 1 ou 2, **caractérisé en ce que** le fluide est introduit dans le bioréacteur à un débit volumique allant de 300 à 600 m³/h.

4. Procédé selon l'une quelconque des revendications 1 à 3, **caractérisé en ce que** la vitesse d'écoulement du flux hélicoïdal dans la zone à proximité du fond du bioréacteur atteint 0,5 m/s à la paroi du bioréacteur.

5. Procédé selon l'une quelconque des revendications 1 à 4, **caractérisé en ce que** le fluide est introduit dans le bioréacteur selon un angle compris entre 40 et 60° par rapport à une introduction dans le sens du rayon.

6. Procédé selon l'une quelconque des revendications 1 à 5, **caractérisé en ce que** le fluide est introduit dans le bioréacteur en appliquant une inclinaison vers le bas dont l'angle est compris entre 0 et 10° par rapport à l'horizontale.

7. Procédé selon l'une quelconque des revendications 1 à 6, **caractérisé en ce que** la suspension est prélevée dans le bioréacteur par aspiration et réintroduite dans le bioréacteur à travers une buse pour constituer ainsi le fluide.

8. Procédé selon l'une quelconque des revendications 1 à 7, **caractérisé en ce que** le fluide est introduit dans le bioréacteur à travers plusieurs buses situées à proximité du fond et réparties sur la circonférence du bioréacteur.

9. Procédé selon la revendication 8, **caractérisé en ce que** les buses sont alimentées en fluide avec un décalage temporaire.

10. Procédé selon la revendication 8, **caractérisé en ce que** l'on fait fonctionner les buses à l'aide d'une pompe commune servant à alimenter les buses les unes après les autres par commutation cyclique.

11. Procédé selon l'une quelconque des revendications 7 à 10, **caractérisé en ce que** la suspension est prélevée par aspiration dans le centre du bioréacteur à proximité du fond.

12. Procédé selon l'une quelconque des revendications 7 à 11, **caractérisé en ce que** le fluide prélevé dans le bioréacteur par aspiration est, en outre, introduit en partie ou temporairement dans le bioréacteur en l'envoyant à travers au moins une buse disposée dans la zone située au niveau de remplissage de la suspension, de façon à créer un mouvement de rotation à la surface de la suspension ou dans les boues flottant sur la surface de la suspension.

13. Procédé selon la revendication 12, **caractérisé en ce que** le fluide est introduit dans le réacteur de fermentation à travers des buses disposées tangentiellement sur la circonférence du récipient.

14. Procédé selon la revendication 13, **caractérisé en ce que** les buses sont alimentées par la même pompe que les buses disposées à proximité du fond.

15. Dispositif destiné au traitement biologique d'une suspension comportant un bioréacteur qui reçoit ladite suspension, l'intérieur du bioréacteur étant pourvu d'un dispositif de guidage vertical atteignant la zone à proximité du fond du bioréacteur ainsi que d'un dispositif d'injection d'un gaz, ces derniers dispositifs servant à recirculer la suspension, **caractérisé en ce qu'**au moins une buse est disposée dans la zone à proximité du fond du bioréacteur pour introduire un fluide dans le bioréacteur.

16. Dispositif selon la revendication 15, **caractérisé en ce que** la buse peut être alimentée en suspension par un conduit d'alimentation relié à l'intérieur du bioréacteur et par une pompe.

17. Dispositif selon les revendications 15 ou 16, **caractérisé en ce que** plusieurs buses sont situées à proximité du fond et réparties sur la circonférence du bioréacteur.

18. Dispositif selon la revendication 17, **caractérisé en ce que** les buses sont reliées à une pompe commune.

19. Dispositif selon les revendications 17 ou 18, **caractérisé en ce que** les buses sont disposées avec une inclinaison dont l'angle est compris entre 0 et 10° par rapport à l'horizontale.

20. Procédé selon l'une quelconque des revendications 16 à 19, **caractérisé en ce que** le fond du réacteur affiche, du bord du récipient vers le centre, une inclinaison de préférence comprise entre 10 et 20°.

21. Procédé selon l'une quelconque des revendications 16 à 20, **caractérisé en ce que** le conduit d'alimentation relié à l'intérieur du bioréacteur est, en outre, relié à une buse disposée dans la zone située au niveau de remplissage prévisionnel de la suspension.

22. Dispositif selon la revendication 21, **caractérisé en ce que** la buse est disposée tangentiellement sur la circonférence du récipient

23. Dispositif selon les revendications 21 ou 22, **caractérisé en ce que** la buse est reliée à la même pompe que la buse disposée à proximité du fond du bioréacteur.
